Europäisches Patentamt

European Patent Office

Office européen des brevets

(11) Publication number: **0 127 373**
**B1**

(12) **EUROPEAN PATENT SPECIFICATION**

(45) Date of publication of patent specification: **21.09.88**

(51) Int. Cl.⁴: **H 01 M 4/66, H 01 M 4/58, H 01 M 4/02, H 01 M 6/18**

(21) Application number: **84303271.5**

(22) Date of filing: **15.05.84**

(54) Cathode structure for a thin film battery, and a battery having such a cathode structure.

(30) Priority: **26.05.83 JP 91438/83**

(43) Date of publication of application:
**05.12.84 Bulletin 84/49**

(45) Publication of the grant of the patent:
**21.09.88 Bulletin 88/38**

(84) Designated Contracting States:
**DE FR GB**

(56) References cited:
EP-A-0 028 691
EP-A-0 103 470
GB-A-1 117 009
US-A-3 808 035
US-A-4 041 140
US-A-4 323 480
EXTENDED ABSTRACTS, vol. 82-2, 1982, pages 34,35, Pennington, New Jersey, US; J.R. REA et al.:"The formation and discharge of very thin solid lithium cells"
PATENTS ABSTRACTS OF JAPAN, vol. 5, no. 159 (E-77)831r, 14th October 1981; & JP - A - 56 88 265 (CITIZEN TOKEI K.K.) 17-07-1981

(73) Proprietor: **HITACHI, LTD.**
6, Kanda Surugadai 4-chome Chiyoda-ku Tokyo 100 (JP)

(72) Inventor: **Kanehori, Keiichi**
33-15 Sayama New Town
Sayama-shi Saitama-ken (JP)
Inventor: **Miyauchi, Katsuki**
5-29-10 Hinohon-cho
Hino-shi Tokyo (JP)
Inventor: **Ito, Yuhio**
2-19-41-508 Irumugawa
Sayama-shi Saitama-ken (JP)
Inventor: **Kirino, Fumiyoshi**
4-7-7-401 Takaido-higashi
Suginamai-ku Tokyo (JP)
Inventor: **Kudo, Tetsuichi**
2-17-5 Oyamadai
Setagaya-ku Tokyo (JP)

(74) Representative: **Paget, Hugh Charles Edward et al**
**MEWBURN ELLIS & CO.** 2/3 Cursitor Street
London EC4A 1BQ (GB)

Courier Press, Leamington Spa, England.

## Description

The present invention relates to a cathode structure for a thin film battery wherein titanium disulfide is the cathode active material, and also to a thin film battery having such a cathode structure.

Several proposals have been made for employing titanium disulfide ($TiS_2$) for the cathode thin film of a thin film battery (see, for example, US-A-4,203,861). In each case, however, a pressed compact of $TiS_2$ powder is attached to a current collector, and a structure electrochemically suitable is not achieved.

In addition, a method of manufacturing $TiS_2$ is described in (Japanese Laid-open Patent Application JP-A-56-84318), but it is disclosed here only that the produced $TiS_2$ is collected so as to be used for a desired purpose.

An object of the present invention is to provide a cathode structure having a $TiS_2$ thin film which can have excellent adhesion to a substrate and which can be dense and of good flatness.

Another object of the present invention is to provide a cathode structure of a thin film battery which has good electrochemical properties.

The invention provides a cathode structure for a thin film battery wherein a titanium disulfide thin film which is a cathode active material is disposed on a substrate, and a layer of titanium oxide is formed between said substrate and said titanium disulfide thin film.

Embodiments of the present invention are described below, by way of example, with reference to the accompanying drawings, in which:—

Fig. 1 is a schematic sectional view of a cathode structure for one thin film battery embodying the present invention;

Fig. 2 is a graph illustrating the performance of a battery to which an embodiment of the present invention has been applied.

Some of the present inventors have devised a technique in which a $TiS_2$ thin film is produced directly on a substrate by chemical vapor deposition (CVD), the resultant substrate being used as a cathode (Japanese Patent Application No. 57-158123). For this cathode, electrochemical characteristics superior to those of the thin film of the prior art prepared by pressing can be expected. It has also been found that, when producing the $TiS_2$ thin film by the CVD by this technique, an excellent cathode is obtained if a titanium metal film is prepared on the substrate beforehand. This technique is also the subject of a patent application (Japanese Patent Application No. 57-7595).

It cannot be said, however, that the cathode material fabricated as described above has sufficiently high degree of adhesion to the substrate. It has sometimes been the case that exfoliation takes place between the substrate and the $TiS_2$ thin film, that the thin film cracks or that the battery undergoes self-discharge.

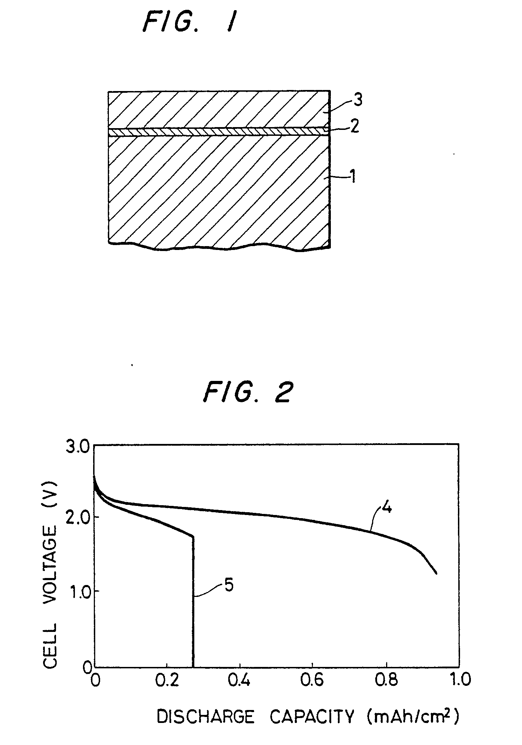

Fig. 1 shows in section a cathode structure of the present invention, comprising a substrate 1, a layer 2 of titanium oxide, and a thin film 3 of titanium disulfide.

$TiS_2$ is a fragile material and has lower degree of adhesion to the substrate than a titanium oxide, for example, $TiO_2$. In the present invention, therefore, the thin film of the titanium oxide is first prepared on the substrate, whereafter the $TiS_2$ thin film is formed thereon. In this case, when the $TiS_2$ thin film is prepared on the titanium oxide thin film by CVD employing $TiCl_4$ and $H_2S$ as source gases, the surface of the titanium oxide is sulfurized, and hence the adhesion between the titanium oxide and $TiS_2$ becomes very strong. It is accordingly possible to provide a cathode structure in which the adhesive strength between the substrate and the $TiS_2$ thin film is high.

As the titanium oxide used in the present invention, the aforementioned $TiO_2$ is preferred, but $TiO$, $Ti_2O_3$ and $Ti_3O_5$ are also suitable. In general, these compounds may have oxygen vacancies, and such materials are also suitable. Mixtures of two or more such oxides can be used.

The thickness of the layer of titanium oxide may appropriately lie in the range from 0.1 µm to 5.0 µm inclusive, more preferably the range from 0.5 µm to 2.0 µm inclusive.

When producing the $TiS_2$ thin film on the titanium oxide thin film by CVD employing $TiCl_4$ and $H_2S$ as the source gases, a highly suitable $TiS_2$ thin film can be formed under the conditions of a source gas pressure of at most 30 kPa and a substrate temperature in the range of 350 to 650°C. Although a lower source gas pressure is better, it requires a longer time for the formation of the $TiS_2$ layer by the CVD, so that a pressure of at least 0.001 kPa is preferred. The concentration ratio of $H_2S$ to $TiCl_4$ should preferably lie in the range of 3 to 20.

It has already been mentioned that, in such a process, the surface of the titanium oxide thin film is partly sulfurized. In this regard, when $H_2S$ alone is brought into contact with the titanium oxide at approximately 470°C before the reaction between $TiCl_4$ and $H_2S$, the surface becomes blackish. It is also within the present invention to form the $TiS_2$ thin film on the thin film of the titanium having such a condition.

By the present invention, a cathode in which the substrate and the $TiS_2$ thin film being the cathode active material are adhered securely can be produced as the cathode of the thin film battery, with the result that the electrochemical characteristics of the cathode are sharply improved. Such a cathode is applicable in a lithium battery, a sodium battery, a copper battery, etc.

Examples of the present invention will now be described, along with a comparative example.

### Example 1

On a substrate made of borosilicate glass and having a diameter of 20 mm and a thickness of 1 mm, a $TiO_2$ amorphous thin film having a thickness of 1 µm was prepared by sputtering, using a target of $TiO_2$, an atmosphere consisting of $H_2$ and

Ar at a ratio of 10:90 and at a pressure of $3 \times 10^{-2}$ mmHg, a power level of $2.5 \text{ W/cm}^2$, and a sputtering time of 3 hr.

On the substrate thus provided with the $TiO_2$ thin film, a $TiS_2$ thin film was produced by CVD, using a source gas consisting of 0.6% $TiCl_4$, 3.6% $H_2S$ and the balance Ar, a source gas flow rate of 2.3 ml/sec, a source gas pressure of 6 mmHg, a substrate temperature of 470°C, and production time of 3 hr. The thickness of the $TiS_2$ thin film thus produced was 20 µm.

Next, on the $TiS_2$ thin film, a $Li_{3.6}Si_{0.6}P_{0.4}O_4$ thin film (thickness: 8 µm) was formed by sputtering. Four lithium thin films were then formed thereon in the shape of dots each 4 mm square and 10 µm thick. Thus, four thin film batteries were fabricated. Comparative Example:

For comparison, four thin film batteries were fabricated by exactly the same procedures and conditions as in the foregoing example, except that the $TiS_2$ thin film was produced directly on the borosilicate glass substrate by CVD without formation of the $TiO_s$ amorphous thin film.

When the thin film batteries obtained by the foregoing example and the comparative example were tested, the following results were obtained. Of the four batteries of the comparative example, two exhibited self-discharge. In contrast, of the four batteries of Example 1, none exhibited self-discharge and all were good batteries. This difference is thought to result from the fact that, in the batteries of Example 1, the $TiS_2$ thin film was securely produced on the substrate owing to the previous formation of the $TiO_2$ thin film on the substrate, so the $TiS_2$ thin film could have a smooth surface free from defects such as cracks, and furthermore, was immune against various impacts in the processes subsequent to its actual production.

While, in the foregoing example, the $TiO_2$ thin film was prepared by sputtering, it is to be understood that a $TiO_2$ thin film prepared by any other suitable process may well be used.

While, in the example, $TiO_2$ was used as the titanium oxide, similar effects can be obtained even with another titanium oxide.

### Example 2

Among the batteries fabricated in Example 1 and Comparative Example, those not exhibiting self-discharge were subjected to galvanostatic discharge at a current density of 20 µA/cm² at 60°C. The results are shown in Fig. 2. The batteries of the present invention demonstrated excellent discharge characteristics as indicated by a curve 4. On the other hand, the characteristics of the batteries of the comparative example were as indicated by a curve 5.

The batteries were observed after discharge by a scanning electron microscope. In the batteries of the comparative example, the interface between the substrate and the $TiS_2$ film were found to be exfoliated and cracked.

### Claims

1. A cathode structure for a thin film battery having a titanium disulfide thin film (3) as cathode active material disposed on a substrate (1), characterized in that a layer (2) of titanium oxide is provided between said substrate (1) and said titanium disulfide thin film (3).

2. A cathode structure as defined in Claim 1, wherein said titanium oxide is at least one of $TiO$, $TiO_2$, $Ti_2O_3$ and $Ti_3O_5$ (including these compounds when exhibiting oxygen vacancies).

3. A cathode structure as defined in Claim 1 or Claim 2, wherein the thickness of the layer (2) of titanium oxide is in the range 0.1 µm to 5.0 µm inclusive.

4. A method of forming a cathode structure for a thin film battery comprising providing a substrate, forming a titanium oxide layer on said substrate, and forming a $TiS_2$ thin film on said titanium oxide layer by chemical vapor deposition employing $TiCl_4$ and $H_2S$ as source gases under a pressure of at most 30 kPa.

5. A thin film battery having a cathode structure according to any one of claims 1 to 3.

### Patentansprüche

1. Kathodenaufbau für eine Dünnschichtbatterie mit einer auf einem Substrat (1) angeordneten Titandisulfid-Dünnschicht (3) als aktivem Kathodenmaterial, dadurch gekennzeichnet, daß zwischen dem Substrat (1) und der Titandisulfid-Dünnschicht (3) eine Schicht (2) aus Titanoxid vorgesehen ist.

2. Kathodenaufbau nach Anspruch 1, wobei das Titanoxid mindenstens eine der Verbindungen $TiO$, $TiO_2$, $Ti_2O_3$, und $Ti_3O_5$ ist (einschließlich dieser Verbindungen, wenn sie Sauerstoff-Fehlstellen aufweisen).

3. Kathodenaufbau nach Anspruch 1 oder 2, wobei die Dicke der Titanoxidschicht (2) im Bereich von 0.1 bis einschießlich 5,0 µm liegt.

4. Verfahren zur Herstellung eines Kathodenaufbaus für eine Dünnschichtbatterie, umfassend das Vorsehen eines Substrats, das Ausbilden einer Titanoxidschicht auf dem Substrat und das Ausbilden einer $TiS_2$-Dünnschicht auf der Titanoxidschicht durch chemische Aufdampfung unter Verwendung von $TiCl_4$ und $H_2S$ als Ausgangsgasen unter einem Druck von höchstens 30 kPa.

5. Dünnschichtbatterie mit einem Kathodenaufbau nach einem der Ansprüche 1 bis 3.

### Revendications

1. Structure de cathode pour une pile à pellicule mince comportant une pellicule mince (3) de disulfure de titane en tant que matériau actif de cathode disposé sur un substrat (1), caractérisée en ce qu'une couche (2) d'oxyde de titane est disposée entre ledit substrat (1) et ladite pellicule mince (3) de disulfure de titane.

2. Structure de cathode selon la revendication 1, dans laquelle ledit oxyde de titane est l'un au

moins de: TiO, TiO$_2$, Ti$_2$O$_3$ et Ti$_3$O$_5$ (incluant ces composés lorsqu'ils présentent des sites d'oxygène vacants).

3. Structure de cathode selon la revendication 1 ou 2, dans laquelle l'épaisseur de la couche (2) d'oxyde de titane se situe dans la gamme de 0,1 μm à 5,0 μm inclusivement.

4. Procédé pour former une structure de cathode pour une pile à pellicule mince, consistant à prévoir un substrat, former une couche d'oxyde de titane sur ledit substrat et former une pellicule mince de TiS$_2$ sur ladite couche d'oxyde de titane au moyen d'un dépôt chimique en phase vapeur en utilisant du TiCl$_4$ et du H$_2$S en tant que gaz sources sous une pression égale au maximum à 30 kPa.

5. Pile à pellicule mince comportant une structure de cathode selon l'une quelconque des revendications 1 à 3.

## FIG. 1

## FIG. 2